# FASCICULE DE BREVET EUROPEEN

(11) **EP 3 627 074 B1**
(45) Date de publication et mention de la délivrance du brevet: **17.11.2021**
(21) Numéro de dépôt: 19197936.8
(22) Date de dépôt: 18.09.2019
(51) Int. Cl.: F25B 25/02, F25B 27/02, F25B 15/04, F25B 7/00, F25B 25/00

(54) **SYSTÈME DE CLIMATISATION COMPRENANT UNE MACHINE À ABSORPTION ET UNE MACHINE À COMPRESSION MÉCANIQUE**
KLIMATISIERUNGSSYSTEM, DAS EINE ABSORPTIONSMASCHINE UND EINE MECHANISCHE KOMPRESSIONSMASCHINE UMFASST
AIR CONDITIONING SYSTEM COMPRISING AN ABSORPTION MACHINE AND A MECHANICAL COMPRESSION MACHINE

(30) Priorité: 18.09.2018 FR 1858407
(43) Date de publication de la demande: 25.03.2020
(73) Titulaire: Commissariat à l'Energie Atomique et aux Energies Alternatives, 75015 Paris (FR)
(72) Inventeur: PHAN, Hai Trieu, 38054 GRENOBLE Cedex 9 (FR); DUMOULIN, Pierre, 38054 GRENOBLE Cedex 9 (FR)
(74) Mandataire: Brizio Delaporte, Allison

(56) Documents cités:
- EP-A1- 3 147 589
- WO-A1-2018/067818
- DE-A1-102013 210 177
- US-A1- 2014 196 482

## Description

### DOMAINE TECHNIQUE DE L'INVENTION

La présente invention concerne le domaine de la production de froid et notamment un système de climatisation comprenant une machine à absorption et une machine à compression mécanique pour la production de froid avantageusement à partir de la chaleur fatale d'un système thermodynamique.

Elle trouve une application particulièrement avantageuse dans des applications utilisant un moteur à combustion interne que ce soit pour des usages stationnaires tels que des chaudières, des réseaux de chaleur...) ou instationnaires tels que pour les véhicules comprenant un moteur thermique, plus précisément un moteur à combustion interne libérant des gaz d'échappement

### ÉTAT DE LA TECHNIQUE

La production de froid est un domaine en développement constant. Les machines à absorption permettent de prélever des calories sur une source chaude pour produire des frigories. Toutefois, il existe des applications dans lesquelles la machine à absorption ne peut produire la puissance nécessaire. Cela est par exemple le cas lorsque la machine à absorption utilise la chaleur fatale d'un moteur à combustion interne notamment d'un véhicule. La climatisation par absorption fonctionne à une température de source chaude d'au minimum 100°C par une ambiance à 30°C. Le besoin thermique à cette température de la cabine d'un véhicule conventionnel est d'environ 5 kilowatts. Cette puissance n'est pas atteignable dans certaines conditions : lors de roulages urbains en prélevant les calories uniquement sur l'échappement moteur ou lors de fortes températures ambiantes, par exemple, une augmentation de la température ambiante de 30°C à 45°C entraine une dégradation de la production de froid de 40%.

Il est donc nécessaire de fournir une solution complémentaire en cas de déficit de production de froid par la machine à absorption.

Dans la publication de Shiming Xu, Jianbo Li and Fusen Liu, An investigation on the absorption-compression hybrid refrigeration cycle driven by gases and power from vehicle engines, Int. J. Energy Res. 2013; 37:1428-1439, la solution proposée est une hybridation d'une machine à absorption avec une machine à compression mécanique utilisant un fluide réfrigérant commun le R124. L'hybridation assure une architecture limitant le nombre de composants du système. Toutefois, ce système utilise comme fluide le R124 qui est un hydrochlorofluorocarbure (HCFC) qui a un fort impact environnemental et a un fort risque d'être interdit d'ici 2030 par le protocole de Copenhague. L'utilisation alternative de fluide de type NH3 conduit par ailleurs à réduire la durabilité de l'huile du compresseur dû fait de l'oxydation provoqué par l'eau entrainée par le mélange eau/NH3.

L'objet de l'invention est de répondre, au moins en partie, aux limitations précédemment exposées. L'objet de l'invention est plus particulièrement de fournir un système de climatisation par une machine à absorption à partir de chaleur fatale d'un moteur thermique à combustion interne qui soit fiable.

### RÉSUMÉ DE L'INVENTION

Pour atteindre cet objectif, selon un mode de réalisation, la présente invention prévoit un système de climatisation comprenant :
- une machine à absorption pour la production de froid comprenant un absorbeur, un générateur, un condenseur, un évaporateur et un circuit fluidique d'absorption apte à recevoir une solution de travail comprenant un fluide frigorigène et un absorbant, le circuit fluidique reliant le générateur au condenseur, le condenseur à l'évaporateur, l'évaporateur à l'absorbeur et l'absorbeur au générateur, et
- une machine à compression mécanique pour la production de froid comprenant un compresseur mécanique, un condenseur, un détendeur, un évaporateur et un circuit fluidique de compression apte à recevoir un fluide réfrigérant, le circuit fluidique de compression reliant le compresseur au condenseur, le condenseur au détendeur, le détendeur à l'évaporateur, l'évaporateur au compresseur.

Le fluide réfrigérant est distinct de la solution de travail, le circuit de circulation fluidique d'absorption et le circuit de circulation fluidique de compression sont des circuits fermés distincts.

L'évaporateur de la machine à absorption est couplé à l'évaporateur de la machine à compression et le condenseur de la machine à absorption est couplé au condenseur de la machine à compression de sorte que la solution de travail de la machine à absorption constitue au moins partiellement une source de chaleur destinée à échanger avec le fluide réfrigérant de la machine à compression.

L'évaporateur de la machine à absorption est couplé à l'évaporateur de la machine à compression de sorte que la solution de travail au niveau de l'évaporateur de la machine à absorption constitue au moins partiellement une source de chaleur destinée à échanger avec le fluide réfrigérant dans l'évaporateur de la machine à compression.

Le condenseur de la machine à absorption est couplé au condenseur de la machine à compression de sorte que la solution de travail au niveau du condenseur de la machine à absorption constitue au moins partiellement une source de chaleur destinée à échanger avec le fluide réfrigérant dans le condenseur de la machine à compression.

Le système selon l'invention permet de proposer un appoint à la production de froid par la machine à absorption grâce à la machine à compression tout en assurant une architecture respectant à la fois l'environnement en limitant les risques de libération du fluide réfrigérant et les contraintes de tenue thermomécanique du moteur de la machine à compression en limitant les risques de libération de la solution de travail dans le compresseur.

Selon l'invention, le système permet de faire fonctionner l'évaporateur de la machine à compression avec la solution de travail au niveau de l'évaporateur de la machine à absorption comme au moins une source de chaleur à refroidir et le condenseur de la machine à compression avec la solution de travail au niveau du condenseur de la machine à absorption comme au moins une source de chaleur.

Ce qui permet avantageusement de permettre de prévoir uniquement un échangeur avec l'air à refroidir pour la climatisation. L'évaporateur de la machine à absorption assure cet échange. De même, un seul échangeur avec l'air extérieur est nécessaire, le condenseur de la machine à absorption assure cet échange.

De plus, l'architecture est assez compacte et simple autorisant l'utilisation du système sur des applications mobiles telles que sur des véhicules équipés de moteur thermique à combustion interne.

Le système permet aussi d'augmenter l'écart de température entre la solution de travail et la source de chaleur à refroidir et/ou la source de chaleur secondaire pour augmenter la production de froid.

Un autre aspect de la présente invention concerne un procédé d'utilisation d'un système de production de froid selon l'une quelconque des revendications précédentes dans lequel dans la machine à absorption :
- le générateur vaporise le fluide frigorigène de la solution de travail par transfert de chaleur d'une source de chaleur
- le condenseur condense le fluide frigorigène à l'état de vapeur issu du générateur par transfert de chaleur d'une source de chaleur secondaire
- l'évaporateur vaporise le fluide frigorigène issu du condenseur par transfert de chaleur d'une source de chaleur à refroidir et produit une énergie frigorifique,
- l'absorbeur condense le fluide frigorigène à l'état de vapeur issu
de l'évaporateur pour permettre son absorption par l'absorbant, dans la machine à compression :
- le compresseur aspire le fluide réfrigérant à l'état gazeux, avantageusement à basse pression et à basse température, pour élever sa pression et sa température
- le condenseur condense le fluide réfrigérant à l'état gazeux provenant du compresseur par transfert de chaleur d'une source de chaleur,
- le détendeur vaporise partiellement le fluide réfrigérant à l'état liquide pour abaisser sa température.
- L'évaporateur vaporise le fluide réfrigérant issu du détendeur par transfert de chaleur d'une source de chaleur
caractérisé en ce que la source de chaleur du condenseur et la source de chaleur de l'évaporateur de la machine à compression sont au moins partiellement constituées par la solution de travail de la machine à absorption, avantageusement, respectivement circulant au niveau du condenseur et de l'évaporateur de la machine à absorption.

Un autre aspect de la présente invention concerne l'utilisation d'un système tel que décrit ci-dessus pour refroidir l'air d'un habitacle de véhicule.

Un autre aspect de la présente invention concerne un véhicule comprenant un moteur thermique à combustion interne et un système tel que décrit ci-dessus.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 est un schéma d'un premier mode de réalisation de l'invention.
La FIGURE 2 est un schéma d'un deuxième mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
- Avantageusement, le générateur 107 de la machine à absorption est configuré pour être alimenté par une source de chaleur 1 comprenant au moins en partie de la chaleur fatale d'un moteur thermique à combustion interne.

Le système selon l'invention permet d'exploiter la chaleur fatale du moteur à combustion pour alimenter la production de froid qui est assez consommatrice d'énergie.
- Avantageusement, la chaleur fatale est issue des gaz d'échappement préférentiellement d'un véhicule.
- Avantageusement, l'évaporateur 104 de la machine à absorption et l'évaporateur 204 de la machine à compression sont réunis dans un échangeur thermique à trois fluides configurés pour assurer l'échange thermique entre la solution de travail du circuit fluidique à absorption 100, le fluide réfrigérant du circuit fluidique à compression 200 et une source chaude à refroidir 2.
- Avantageusement, le condenseur 102 de la machine à absorption et le condenseur 202 de la machine à compression sont réunis dans un échangeur thermique à trois fluides configurés pour assurer l'échange thermique entre la solution de travail du circuit fluidique à absorption de la machine, le fluide réfrigérant à compression du circuit fluidique 200 et une source de refroidissement 3.

L'utilisation d'un échangeur tri-fluides facilite l'intégration de la machine à compression à la machine à absorption. Seuls les évaporateurs et les condenseurs sont remplacés par les échangeurs tri-fluides, les autres composants de la machine à absorption et de la machine à compression restent inchangés.

Avantageusement, la machine à compression peut fonctionner en simultanée de la machine à absorption.

Avantageusement, le système est configuré pour assurer un fonctionnement de la machine à compression en complément de la machine à absorption.
- Avantageusement, la machine à compression est agencée en parallèle sur le circuit fluidique 100 de la machine à absorption.

Les composants utilisés dans cette variante sont standards. Ils ne nécessitent pas de développement particulier. Les performances de la machine à absorption restent identiques, la machine à compression est agencée en parallèle sur le circuit fluidique de la machine à absorption
- Avantageusement, le circuit fluidique à absorption 100 comprend une première branche de dérivation 300 configurée pour faire circuler la solution de travail au niveau de l'évaporateur 204 de la machine à compression comme source de chaleur.

Avantageusement, le circuit fluidique à absorption 100 est configuré pour faire circuler le fluide de travail en parallèle dans l'évaporateur 104 de la machine à absorption et dans l'évaporateur 204 de la machine à compression.
- Avantageusement, la première branche de dérivation 300 est connectée fluidiquement au circuit fluidique à absorption 100 par un premier noeud 10 en aval de l'évaporateur 104, préférentiellement entre l'évaporateur 104 et l'absorbeur 105 et par un deuxième noeud 11 en amont de l'évaporateur 104, préférentiellement entre le détendeur 103 et l'évaporateur 104.
- Avantageusement, le circuit fluidique à absorption 100 comprend une deuxième branche de dérivation 301 configurée pour faire circuler la solution de travail au niveau du condenseur 202 de la machine à compression comme source de chaleur.

Avantageusement, le circuit fluidique à absorption 100 est configuré pour faire circuler le fluide de travail en parallèle dans le condenseur 102 de la machine à absorption et dans le condenseur 202 de la machine à compression.
- Avantageusement, la deuxième branche de dérivation 301 est connectée fluidiquement au circuit fluidique à absorption 100 par un premier noeud 12 en aval du condenseur 102, préférentiellement entre le condenseur 102 et le détendeur 103 et par un deuxième noeud 13 en amont du condenseur 102, préférentiellement entre le générateur 107 et le condenseur 102.

Avantageusement, les branches de dérivation sont munies de pompes destinées à mettre en circulation le fluide de travail dans les branches de dérivation.
- Avantageusement, la solution de travail de la machine à absorption est un mélange NH3/H2O comme couple fluide frigorigène/absorbant.
- Avantageusement, le fluide réfrigérant de la machine à compression est choisi parmi la famille des hydrofluoro-oléfines (HFO), dit de quatrième génération, tel que par exemple R-1234yf.

Les réfrigérants de la famille des hydrofluoro-oléfines sont de gaz fluorés à très faible potentiel de réchauffement global (PRG ou GWP en anglais pour Global Warming Potential) .

L'usage de l'article indéfini " un " ou " une " pour un élément ou une étape n'exclut pas, sauf mention contraire, la présence d'une pluralité de tels éléments ou étapes.

Dans la présente description, l'expression « A fluidiquement raccordé à B» est synonyme de" A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

Avantageusement, la solution de travail « au niveau » s'entend comme circulant dans, ou issue, ou en sortie de, et préférentiellement directement, c'est-à-dire sans organe intermédiaire autre que des vannes, pompes, et notamment sans échangeur.

La climatisation est l'action de climatiser un espace, c'est-à-dire de maintenir, à des conditions déterminées de température et d'humidité notamment, et de régénérer l'air d'une enceinte au moyen d'une circulation d'air traité.

Le système selon l'invention permet de traiter un flux d'air par une machine à absorption produisant du froid de sorte à notamment refroidir un flux d'air.

Selon l'invention, la machine à absorption tire l'énergie nécessaire à son fonctionnement de la chaleur fatale de gaz d'échappement d'un moteur thermique à combustion interne avantageusement d'un véhicule.

Le système selon l'invention est destiné à traiter l'air, notamment le refroidir, d'un habitacle d'un véhicule. Ainsi, l'intérieur de l'habitacle peut être rafraichi par le système qui utilise l'énergie fatale des gaz d'échappement produits par le moteur thermique du véhicule.

Une machine à absorption est une pompe à chaleur à absorption thermique utilisant des couples réfrigérant/sorbant présentant de fortes affinités. Cette solution présente de faibles consommations électriques, l'énergie principale étant issue de la source thermique, permettant de limiter le coût de fonctionnement dans le cas de la valorisation d'une source d'énergie à bas coût ou de la chaleur fatale. De plus, les fluides frigorigènes utilisés dans les dispositifs à absorption ne présentent aucun ou de faible impact environnemental : ni sur le réchauffement climatique (GWP pour Global warning potential = 0), ni sur la couche d'ozone (ODP pour Ozone depletion potential = 0).

Ce type de dispositif fonctionne grâce à la faculté de certains liquides d'absorber (réaction exothermique) et de désorber (réaction endothermique) une vapeur. Elles utilisent également le fait que la solubilité de cette vapeur dans le liquide dépende de la température et de la pression. Ainsi, ces dispositifs utilisent comme fluide de travail un mélange binaire, dont l'un des composants est plus volatil que l'autre, et constitue le fluide frigorigène.

Une machine à absorption comprend donc quatre échangeurs principaux (générateur 107, absorbeur 105, condenseur 102 et évaporateur 104), et avantageusement de un à trois échangeurs secondaires. Le rôle des trois échangeurs secondaires est d'améliorer les performances de la machine telles que : un rectifieur 101, un économiseur (non représenté), un sous-refroidisseur (non représenté). Un rectifieur 101 peut être ajouté entre le générateur 105 et le condenseur 106 et/ou un sous-refroidisseur entre le condenseur 106 et l'évaporateur 108. Selon une possibilité non représentée, la machine à absorption comprend également au moins une pompe à solution et au moins deux vannes de détente. Ce type de machine fonctionne selon trois niveaux de température : un niveau de température basse correspondant à la production de froid à l'évaporateur 104, un niveau de température intermédiaire correspondant à la température de condensation du fluide frigorigène, mais également à celle d'absorption du fluide frigorigène par l'absorbant et un niveau de température élevé correspondant à la température motrice du générateur 107. Une machine à absorption fonctionne pour une part à haute pression entre la pompe 106 en amont du générateur 107 et le détendeur 103, en aval du condenseur 102, et pour une autre part à basse pression entre le détendeur 103, en aval du condenseur 102 et la pompe 106 en amont du générateur 107.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe 106, mais son travail est environ 96 fois inférieur au travail que le compresseur de vapeur doit fournir pour des conditions de fonctionnement similaires.

Selon l'invention, la machine à absorption comprend une solution de travail fluide frigorigène/absorbant comprenant le couple ammoniac /eau (NH3/H2O).

Ce couple est utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur nécessitant parfois la présence d'un rectifieur.

La solution de travail est dite riche, car la concentration en fluide frigorigène est plus importante que dans la solution de travail dite pauvre.

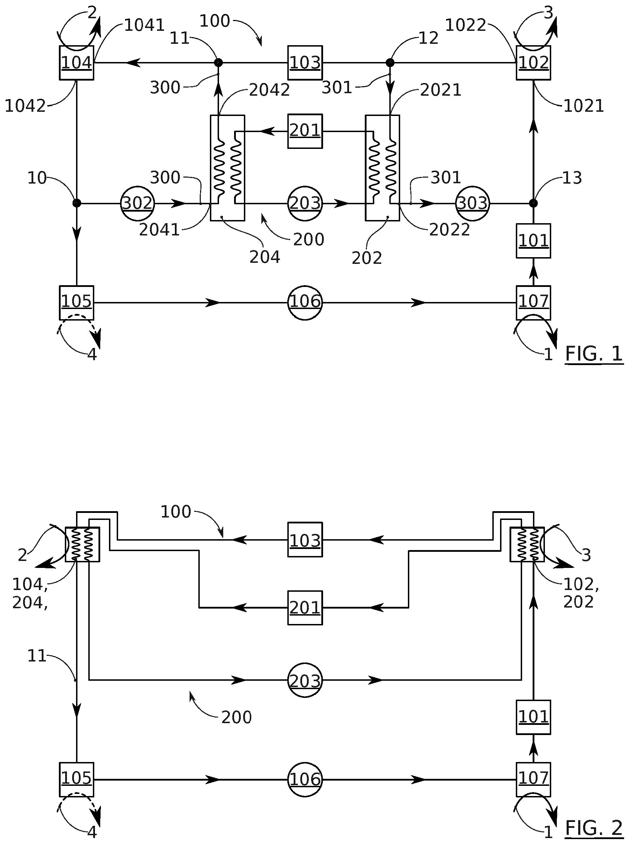

Une machine à absorption selon l'invention est décrite ci-après dont un exemple de réalisation est illustré aux figures 1 et 2.

La machine à absorption selon l'invention comprend :
- Un générateur 107 configuré pour vaporiser le fluide frigorigène. Le générateur 107 est connecté fluidiquement à l'absorbeur 105 et au condenseur 102. Le générateur 107 comprend une connexion fluidique avec l'absorbeur 105 permettant l'entrée de la solution de travail dite riche dans le générateur 107, préférentiellement directement. Selon un mode de réalisation non représenté, la machine à absorption comprend entre le générateur 107 et l'absorbeur 105, un économiseur, un détendeur et une pompe 106. L'économiseur et le détendeur assurent la circulation de la solution de travail entre l'absorbeur 105 et le générateur 107 et inversement entre le générateur 107 et l'absorbeur 105 en générant la solution de travail dite pauvre et la solution de travail dite riche. Le générateur 107 comprend une connexion fluidique avec le condenseur 102 permettant la sortie de la vapeur de fluide frigorigène hors du générateur 107, préférentiellement directement sauf par exemple en présence d'un rectifieur 101 décrit ci-après. Le générateur 107 comprend également une entrée et une sortie de source de chaleur 1 permettant l'apport de chaleur nécessaire à la vaporisation du fluide frigorigène. Selon l'invention, la source de chaleur 1 ou source chaude comprend la chaleur fatale des gaz d'échappement d'un moteur à combustion interne par exemple d'un véhicule destinés avantageusement à circuler dans une ligne d'échappement des gaz. La source chaude 1 provient au moins partiellement de l'énergie fatale des gaz d'échappement d'un moteur à combustion interne d'un véhicule.

La machine à absorption selon l'invention comprend :
- Un condenseur 102 configuré pour condenser la vapeur de fluide frigorigène. Le condenseur 102 est connecté fluidiquement au générateur 107 et à l'évaporateur 104. Le condenseur 102 comprend une connexion fluidique issue du générateur 107 permettant l'entrée de la vapeur de fluide frigorigène dans le condenseur 102, préférentiellement directement ou au travers d'un rectifieur 101. Le condenseur 102 comprend une connexion fluidique avec l'évaporateur 104, permettant la sortie du fluide frigorigène à l'état liquide, directement ou au travers d'un détendeur 103 destiné à amener le fluide frigorigène à sa pression d'évaporation, il abaisse la pression du fluide. Le condenseur 102 comprend également une source de chaleur secondaire 3 telle qu'une circulation d'air 3 pour assurer son fonctionnement normal. Le changement de phase du fluide frigorigène de l'état vapeur à l'état liquide s'accompagne d'une libération de chaleur qui est transmise au flux d'air circulant par exemple autour de tube. L'air réchauffé est évacué du système de climatisation.

Avantageusement, la machine à absorption comprend un rectifieur 101 disposé entre le générateur 107 et le condenseur 102. Le rectifieur 101 permet d'enlever par condensation les traces d'eau entrainées avec le fluide réfrigérant en sortie du générateur 107 et assure ainsi le bon fonctionnement de la machine.

Avantageusement, la machine à absorption comprend un détendeur 103 agencé entre le condenseur 102 et l'évaporateur 104. Le détendeur 103 est configuré pour détendre le fluide frigorigène à l'état liquide issu du condenseur 102. Le détendeur 103 amène le fluide frigorigène à sa pression d'évaporation.

Avantageusement, la machine à absorption peut comprend un sous-refroidisseur non représenté agencé entre le condenseur 102 et l'évaporateur 104. Le sous refroidisseur permet de récupérer de l'énergie et donc de réduire la taille de du condenseur 102 et de l'évaporateur 104 et ainsi d'améliorer de manière notable les performances de la machine. La pertinence de ce composant est fonction des températures de fonctionnement, la taille de la machine et le coût des échangeurs.

La machine à absorption selon l'invention comprend :
- Un évaporateur 104 configuré pour vaporiser le fluide frigorigène et produire une énergie frigorifique. L'évaporateur 104 est connecté fluidiquement au condenseur 102 et à l'absorbeur 105. L'évaporateur 104 comprend une connexion fluidique issue du condenseur 102, plus précisément avec un détendeur 103, permettant l'entrée du fluide frigorigène à l'état liquide dans l'évaporateur 104, préférentiellement directement. L'évaporateur 104 comprend une connexion fluidique avec l'absorbeur 105, permettant la sortie de la vapeur de fluide frigorigène, préférentiellement directement. L'évaporateur 104 comprend également une entrée d'une source de chaleur 2 à refroidir et une sortie de la source de chaleur 2 refroidie. Le changement de phase du fluide frigorigène de l'état liquide à de l'état vapeur s'accompagne d'une transmission de chaleur de la source chaude 2, ou de chaleur, à refroidir au fluide frigorigène. La source chaude à refroidir 2 transmet des calories et voit ainsi sa température s'abaisser. Selon l'invention, la source chaude à refroidir 2 est, soit directement ou indirectement, par au moins un intermédiaire tel un fluide frigoporteur à refroidir, de l'air à refroidir par exemple pour l'habitacle du véhicule.

La machine à absorption selon l'invention comprend :
- Un absorbeur 105 configuré pour condenser la vapeur de fluide frigorigène issue de l'évaporateur 104. L'absorbeur 105 est connecté fluidiquement à l'évaporateur 104 et au générateur 107. L'absorbeur 105 comprend une connexion fluidique issue de l'évaporateur 104 permettant l'entrée du fluide frigorigène à l'état de vapeur dans l'absorbeur 105, préférentiellement directement. L'absorbeur 105 comprend une connexion fluidique avec le générateur 107, plus précisément avec une pompe 106 destinée à mettre en circulation la solution de travail dans le circuit de circulation fluidique, plus précisément une solution de travail dite riche sort de l'absorbeur 105 en direction du générateur 107 par la connexion fluidique préférentiellement directement connectée à la pompe 106. Avantageusement, la pompe 106 est connectée fluidiquement, préférentiellement directement, à un économiseur au travers duquel la solution de travail dite riche est réchauffée avant d'être transmise au générateur 107. Avantageusement, l'économiseur est un échangeur transmettant de la chaleur de la solution dite pauvre issue du générateur 107 vers la solution dite riche issue de l'absorbeur 105. L'économiseur permet une récupération d'énergie permettant de réduire la taille de l'absorbeur 105 et du générateur 107 et ainsi améliorer de manière notable les performances de la machine. Avantageusement, de manière non représenté, l'absorbeur 105 comprend une connexion fluidique avec le générateur 107, plus précisément avec un détendeur. La connexion fluidique permet l'entrée de la solution de travail dite pauvre issue du générateur 107 dans l'absorbeur 105, préférentiellement directement. Le changement de phase du fluide frigorigène de l'état vapeur à l'état liquide s'accompagne d'une libération de chaleur qui est transmise à une source de chaleur secondaire tel qu'un flux d'air 4 circulant par exemple autour de tubes. L'air réchauffé est évacué du système de climatisation.

La machine à absorption comprend un circuit fluidique à absorption 100 configuré pour assurer la connexion fluidique des différents composants de la machine à absorption. Le circuit fluidique à absorption 100 est un circuit fermé destiné à recevoir la solution de travail.

Selon l'invention, le système comprend une ligne d'échappement de gaz pour conduire les gaz d'échappement du moteur thermique à l'extérieure. La machine à absorption est en conduction thermique avec la ligne d'échappement de gaz de sorte à récupérer la chaleur fatale des gaz qui constitue au moins en partie la source de chaleur 1 du générateur 107. La ligne d'échappement de gaz est en conduction thermique indirecte avec le générateur 107 c'est-à-dire que le dispositif comprend un échangeur de chaleur agencé entre le générateur 107 et la ligne d'échappement de gaz pour transférer la chaleur fatale, des gaz d'échappement au générateur 107.

Le système comporte avantageusement une conduite de circulation d'air pour conduire de l'air destiné à être refroidi à la machine à absorption. La conduite de circulation d'air est en conduction thermique avec l'évaporateur 104 soit directement c'est-à-dire que la conduite de circulation d'air traverse l'évaporateur 107, soit indirectement c'est-à-dire que le dispositif comprend un échangeur de chaleur agencé entre l'évaporateur et la conduite de circulation d'air pour transférer l'énergie frigorifique produite par l'évaporateur 104 à la conduite de circulation d'air plus précisément à l'air destiné à être refroidi.

Comme évoqué ci-dessus, lorsque la différence de température est trop faible entre les sources de chaleur et la solution de travail et/ou que la chaleur fatale n'est pas suffisante pour produire une quantité de froid demandée; la machine à absorption ne peut suffire à fournir une climatisation satisfaisante.

Selon l'invention, le système de production de froid comprend une machine à absorption et une machine à compression. Les deux machines sont associées pour assurer la production de froid dans de nombreuses situations.

De manière caractéristique, le système selon la présente invention comprend une machine à compression. Une machine à compression mécanique comprend aux moins quatre composants dont un évaporateur 204, un condenseur 202, un compresseur 203 et un détendeur 201. Les différents composants de la machine à compression sont connectés fluidiquement par un circuit de fluidique de compression 200. Le circuit fluidique 200 est destiné à recevoir un fluide réfrigérant. À titre d'exemple préféré, le fluide réfrigérant appartient à la famille des hydrofluoro-oléfines (HFO), dit de quatrième génération, tel que par exemple R-1234yf.

De manière caractéristique, l'évaporateur 104 de la machine à absorption est couplé à l'évaporateur 204 de la machine à compression. De même, le condenseur 102 de la machine à absorption est couplé au condenseur 202 de la machine à compression.

Préférentiellement, le couplage est direct sans organe intermédiaire. L'énergie thermique est transférée directement d'un évaporateur à l'autre et d'un condenseur à l'autre.

Le couplage est avantageusement un couplage thermique et éventuellement fluidique. On entend par couplage une liaison des évaporateurs des deux machines et des condenseurs des deux machines.

Le couplage signifie qu'il y a des interactions entre les éléments couplés, c'est à dire une réaction réciproque de deux phénomènes l'un sur l'autre.

Le couplage selon l'invention assure que la source de chaleur du condenseur 202 de la machine à compression est au moins partiellement constituée par la solution de travail de la machine à absorption, et en particulier par la solution de travail au niveau, c'est-à-dire circulant dans ou en sortie, du condenseur 102 de la machine à absorption. De cette manière, la solution de travail à l'était liquide pénètre dans le condenseur 202 de la machine à compression de sorte à récupérer l'énergie thermique résultant de la condensation du fluide réfrigérant.

Le couplage selon l'invention assure que la source de chaleur de l'évaporateur 204 de la machine à compression est au moins partiellement constituée par la solution de travail de la machine à absorption et en particulier par la solution de travail au niveau, c'est-à-dire circulant dans ou en sortie, de l'évaporateur 104 de la machine à absorption. De cette manière, la solution de travail à l'état gazeux pénètre dans l'évaporateur 204 de la machine à compression de sorte à transférer son énergie thermique au fluide réfrigérant de la machine à compression lui permettant de passer à l'état gazeux tandis que la solution de travail passe avantageusement à l'état liquide.

Le couplage des deux évaporateurs 104, 204 et des deux condenseurs 102, 202 permet d'assurer un fonctionnement commun des deux machines pour la production de froid. Il est ainsi possible de compléter ou éventuellement de remplacer la production de froid de la machine à absorption par la production de froide la machine à compression en cas de besoin.

Dans la machine à compression mécanique les différents composants sont ci-après décrits.

Le compresseur 203 est destiné à comprimer le fluide réfrigérant ce qui provoque une augmentation de la température du fluide réfrigérant. Le compresseur 203 aspire le fluide réfrigérant à basse pression et à basse température. L'énergie mécanique apportée par le compresseur 203 va permettre d'élever la pression et la température du fluide réfrigérant à l'état gazeux. Une augmentation d'enthalpie en résultera. Le fluide réfrigérant sort du compresseur 203 à l'état gazeux. Le compresseur 203 est alimenté par un moteur. Le compresseur 203 est connecté fluidiquement à l'évaporateur 204 et au condenseur 202. Le compresseur 203 comprend une connexion fluidique avec l'évaporateur 204 permettant l'entrée du fluide réfrigérant à l'état de gaz à basse température et basse pression dans le compresseur 203, préférentiellement directement. Le compresseur 203 comprend une connexion fluidique avec le condenseur 202 permettant la sortie du fluide réfrigérant à l'état de gaz à haute température et haute pression du compresseur 203, préférentiellement directement.

Le condenseur 202 est destiné à condenser le fluide réfrigérant à l'état de gaz chaud provenant du compresseur 203, avantageusement par échange thermique avec une source de chaleur également dénommée source de refroidissement. Le fluide réfrigérant à l'état de gaz va céder sa chaleur à une source de refroidissement tel qu'un fluide extérieur comme par exemple un flux d'air circulant. Selon l'invention, la source de refroidissement est au moins partiellement, préférentiellement uniquement, la solution de travail circulant dans le circuit fluidique à absorption 100 et plus précisément circulant dans le condenseur 103 de la machine à absorption. Le fluide réfrigérant sort du condenseur 203 à l'état liquide. Le condenseur 202 est connecté fluidiquement au compresseur 203 et au détendeur 201. Le condenseur 202 comprend une connexion fluidique avec le compresseur 203 permettant l'entrée du fluide réfrigérant à l'état de gaz à haute température et haute pression dans le condenseur 202, préférentiellement directement. Le condenseur 202 comprend une connexion fluidique avec le détendeur 201 permettant la sortie du fluide réfrigérant à l'état de liquide du condenseur 202, préférentiellement directement.

Le détendeur 201 est destiné à détendre le fluide réfrigérant à l'état liquide. Le détendeur 201 abaisse la pression du fluide réfrigérant provoquant une baisse de sa température. Le fluide réfrigérant sort du détendeur 201 partiellement à l'état gazeux. Le détendeur 201 est connecté fluidiquement au condenseur 202 et à l'évaporateur 204. Le détendeur 201 comprend une connexion fluidique avec le condenseur 202 permettant l'entrée du fluide réfrigérant à l'état de liquide à haute pression dans le détendeur 201, préférentiellement directement. Le détendeur 201 comprend une connexion fluidique avec l'évaporateur 204 permettant la sortie du fluide réfrigérant à l'état partiellement gazeux du détendeur 201, préférentiellement directement.

L'évaporateur 204 est destiné à vaporiser le fluide réfrigérant. Le fluide réfrigérant à l'état liquide s'évapore en absorbant la chaleur d'une source de chaleur à refroidir telle qu'un fluide extérieur comme par exemple un flux d'air circulant. Selon l'invention, la source de chaleur est au moins partiellement, préférentiellement uniquement, la solution de travail circulant dans le circuit fluidique à absorption 100 et plus précisément circulant dans l'évaporateur 104 de la machine à absorption, ainsi la solution de travail à l'état gazeux transfert son énergie thermique au fluide réfrigérant. Le fluide réfrigérant sort de l'évaporateur 204 à l'état gazeux. L'évaporateur 204 est connecté fluidiquement au détendeur 201 et au compresseur 203. L'évaporateur 204 comprend une connexion fluidique avec le détendeur 201 permettant l'entrée du fluide réfrigérant à l'état liquide partiellement gazeux dans l'évaporateur 204, préférentiellement directement. L'évaporateur 204 comprend une connexion fluidique avec le compresseur 203 permettant la sortie du fluide réfrigérant à l'état de gazeux de l'évaporateur 204, préférentiellement directement.

Le circuit fluidique 200 est un circuit fermé, le fluide réfrigérant évolue sous l'action du compresseur dans les quatre éléments constituant la machine à compression.

Selon un premier mode de réalisation illustré en figure 1, le couplage des deux évaporateurs 104, 204 et des deux condenseurs 102, 202 est réalisé en parallèle. La machine à compression est agencée en parallèle de la machine à absorption. Le circuit fluidique à absorption 100 et le circuit fluidique à compression 200 sont identiques à ce qui a été décrit ci-dessus. Les circuits fluidiques sont fermés et les fluides de chacun ne se mélangent pas.

L'évaporateur 204 et le condenseur 202 de la machine à compression sont respectivement placés en parallèle de l'évaporateur 104 et du condenseur 102 de la machine à absorption.

Le circuit fluidique 100 à absorption comprend une première branche de dérivation 300 sur laquelle est agencé l'évaporateur 204 de la machine à compression. La première branche de dérivation 300 est connectée par deux nœuds 10-11 au circuit fluidique 100. Le premier nœud 10 est agencé en aval de l'évaporateur 104, préférentiellement entre l'évaporateur 104 et l'absorbeur 105. Le deuxième nœud 11 est agencé en amont de l'évaporateur 104, préférentiellement entre le détendeur 103 et l'évaporateur 104. La première branche de dérivation 300 est configurée pour recevoir la solution de travail de la machine à absorption. La solution de travail circule dans la première branche de dérivation 300 du premier nœud 10 vers le deuxième nœud 11. La première branche de dérivation 300 comprend avantageusement une pompe 302 destinée à mettre en circulation la solution de travail dans la première branche de dérivation 300.

L'évaporateur 104 est connecté fluidiquement à l'évaporateur 204, au travers par exemple de la pompe 302. Sur la figure 1, l'entrée 1041 de l'évaporateur 104 est connectée fluidiquement au détendeur 103 et à la sortie 2042 de l'évaporateur 204 par l'intermédiaire du premier nœud 10. La sortie 1042 de l'évaporateur 104 est connectée fluidiquement à l'entrée 2041 de l'évaporateur 204, préférentiellement au travers de la pompe 302 et à l'absorbeur 105 par l'intermédiaire du deuxième nœud 11. L'évaporateur 204 assure l'échange thermique entre le fluide réfrigérant de la machine à absorption et la solution de travail de la machine à absorption.

Le circuit fluidique 100 à absorption comprend une deuxième branche de dérivation 301 sur laquelle est agencé le condenseur 202 de la machine à compression. La deuxième branche de dérivation 301 est connectée par deux nœuds 12-13 au circuit fluidique 100. Le premier nœud 12 est agencé en aval du condenseur 102, préférentiellement entre le condenseur 102 et le détendeur 103. Le deuxième nœud 13 est agencé en amont du condenseur 102, préférentiellement entre le générateur 107 et le condenseur 102, plus précisément entre le rectifieur 101 et le condenseur 102. La deuxième branche de dérivation 301 est configurée pour recevoir la solution de travail de la machine à absorption. La solution de travail circule dans la deuxième branche de dérivation 301 du premier nœud 12 vers le deuxième nœud 13. La deuxième branche de dérivation 301 comprend avantageusement une pompe 303 destinée à mettre en circulation la solution de travail dans la deuxième branche de dérivation 301.

Le condenseur 102 est connecté fluidiquement au condenseur 202, au travers par exemple d'une pompe 303. Sur la figure 1, la sortie 1022 du condenseur 102 est connectée fluidiquement à l'entrée 2021 du condenseur 202 et au détendeur 103 par l'intermédiaire du premier nœud 12. L'entrée 1021 du condenseur 102 est connectée fluidiquement au rectifieur 101 et à la sortie 2022 du condenseur 202, préférentiellement au travers de la pompe 303, par l'intermédiaire du deuxième nœud 13. Le condenseur 202 assure l'échange thermique entre le fluide réfrigérant de la machine à absorption et la solution de travail de la machine à absorption.

Avantageusement, la circulation du fluide réfrigérant et de la solution de travail se fait à contrecourant dans l'évaporateur 204 et dans le condenseur 202.

Selon un deuxième mode de réalisation illustré en figure 2, le couplage des deux évaporateurs 104, 204 et des deux condenseurs 102, 202 est réalisé de sorte que les deux évaporateurs 104, 204 soient réunis dans un échangeur thermique à trois fluides et que les deux condenseurs 102, 202 soient réunis dans un échangeur thermique à trois fluides. Les circuits fluidiques 100, 200 de la machine à absorption et de la machine à compression sont identiques à ce qui est décrit ci-dessus de manière générale.

Les échangeurs à trois fluides permettent d'assurer un échange thermique entre la source de chaleur et la solution de travail et le fluide réfrigérant. L'échangeur trois fluides est configuré pour assurer la circulation des trois fluides à co-courant, c'est-à-dire les trois fluides dans un même sens de circulation, ou à contre-courant, c'est à dire dans des sens de circulation opposés deux à deux ou à courants croisés, c'est à dire dans des sens de circulation opposés pour le fluide réfrigérant et la solution de travail et un sens de circulation transversal pour la source de chaleur qui est un flux gazeux tel l'air dans ce cas-là.

Lorsque la machine à compression est en fonctionnement, elle permet d'augmenter l'écart de température entre la solution de travail circulant dans le condenseur 102 et dans l'évaporateur 104 et les sources de chaleur 2 et 3 et assurer ainsi une production de froid satisfaisante au niveau de l'évaporateur 104 de la machine à absorption.

En fonctionnement, la machine à absorption fonctionne avantageusement seule lorsque les conditions sont favorables. Avantageusement, lorsque le moteur thermique à combustion interne est suffisamment chaud c'est-à-dire que la chaleur fatale du moteur thermique est suffisante. Dans les applications automobiles, cela correspond à un roulage sur route ou autoroute.

En cas de déficit de production de froid c'est à dire la quantité de froid à produire est supérieure à la quantité de froid produite par la machine à absorption, la machine à compression est actionnée. La mise en fonctionnement de la machine à compression implique la mise en route d'un moteur actionnant le compresseur 203 et éventuellement la mise en route des pompes 302, 303. Avantageusement, la machine à compression fonctionne en complément, c'est à dire simultanément à la machine à absorption et pas de manière indépendante.

Le système selon l'invention comprend selon une possibilité, un module de gestion du fonctionnement de la machine à absorption et de la machine à compression. Le module de gestion est configuré pour définir les conditions dans lesquelles la machine à compression doit être mise en fonctionnement. Une condition peut être que la température de sortie de la source chaude à refroidir 2 hors de l'évaporateur 104 de la machine à absorption est inférieure à une température cible minimale. Dans ce cas-là cela signifie que la machine à absorption ne peut satisfaire la demande de froid. Le module de gestion commande la mise en route de la machine à compression par l'actionnement du moteur du compresseur 203 et éventuellement des pompes 302, 303. La machine à compression va alors assurer un chauffage de la solution de travail circulant dans l'évaporateur 204 et un refroidissement chauffage de la solution de travail circulant dans le condenseur 202 ce qui permet d'augmenter l'écart de température de la solution de travail avec la source de chaleur à refroidir 2 dans l'évaporateur 104 et avec la source de chaleur secondaire 3 dans le condenseur 102. L'augmentation de l'écart de température améliore l'efficacité des transferts thermiques et donc augmente la production de froid.

Le module de gestion commande l'arrêt de la machine à compression une fois que la température de sortie de la source chaude à refroidir 2 hors de l'évaporateur 104 de la machine à absorption est au moins supérieure à la température cible minimale voire supérieure à une température cible maximale.

### REFERENCES

- 1.: Source de chaleur
- 2.: Source de chaleur à refroidir
- 3.: Source de chaleur secondaire
- 4.: Source de chaleur secondaire

- 10.: Premier nœud
- 11.: Deuxième nœud
- 12.: Premier nœud
- 13.: Deuxième nœud

- 100.: Circuit fluidique d'absorption
- 101.: Rectifieur
- 102.: Condenseur
1021. Entrée condenseur
1022. Sortie condenseur
- 103.: Détendeur
- 104.: Evaporateur
1041. Entrée évaporateur
1042. Sortie évaporateur
- 105.: Absorbeur
- 106.: Pompe
- 107.: Générateur

- 200.: Circuit fluidique de compression
- 201.: Détendeur
- 202.: Condenseur
2021. Entrée condenseur
2022. Sortie condenseur
- 203.: Compresseur
- 204.: Evaporateur
2041. Entrée évaporateur
2042. Sortie évaporateur

- 300.: Première branche de dérivation
- 301.: Deuxième branche de dérivation
- 302.: Pompe
- 303.: Pompe

## Revendications

1. Système de climatisation comprenant :
- une machine à absorption pour la production de froid comprenant un absorbeur (105), un générateur (107), un condenseur (102), un évaporateur (104) et un circuit fluidique d'absorption (100) apte à recevoir une solution de travail comprenant un fluide frigorigène et un absorbant, le circuit fluidique (100) reliant le générateur (107) au condenseur (102), le condenseur (102) à l'évaporateur (104), l'évaporateur (104) à l'absorbeur (105) et l'absorbeur (105) au générateur (107), et
- une machine à compression mécanique pour la production de froid comprenant un compresseur mécanique (203), un condenseur (202), un détendeur (201), un évaporateur (204) et un circuit fluidique de compression (200) apte à recevoir un fluide réfrigérant, le circuit fluidique de compression (200) reliant le compresseur (203) au condenseur (202), le condenseur (202) au détendeur (201), le détendeur (201) à l'évaporateur (204), l'évaporateur (204) au compresseur (203) le fluide réfrigérant étant distinct de la solution de travail, le circuit de circulation fluidique d'absorption (100) et le circuit de circulation fluidique de compression (200) étant des circuits fermés distincts le système étant **caractérisé en ce que** l'évaporateur (104) de la machine à absorption est couplé à l'évaporateur (204) de la machine à compression de sorte que la solution de travail au niveau de l'évaporateur (104) de la machine à absorption constitue au moins partiellement une source de chaleur destinée à échanger avec le fluide réfrigérant dans l'évaporateur (204) de la machine à compression, et le condenseur (102) de la machine à absorption est couplé au condenseur (202) de la machine à compression de sorte que la solution de travail au niveau du condenseur (102) de la machine à absorption constitue au moins partiellement une source de chaleur destinée à échanger avec le fluide réfrigérant dans le condenseur (202) de la machine à compression.

2. Système selon la revendication précédente dans lequel le générateur (107) de la machine à absorption est configuré pour être alimenté par une source de chaleur (1) comprenant au moins en partie de la chaleur fatale d'un moteur thermique à combustion interne.

3. Système selon la revendication précédente dans lequel la chaleur fatale est issue des gaz d'échappement préférentiellement d'un véhicule.

4. Système selon l'une quelconque des revendications précédentes dans lequel l'évaporateur (104) de la machine à absorption et l'évaporateur (204) de la machine à compression sont réunis dans un échangeur thermique à trois fluides configurés pour assurer l'échange thermique entre la solution de travail du circuit fluidique à absorption (100), le fluide réfrigérant du circuit fluidique à compression (200) et une source chaude à refroidir (2).

5. Système selon l'une quelconque des revendications précédentes dans lequel le condenseur (102) de la machine à absorption et le condenseur (202) de la machine à compression sont réunis dans un échangeur thermique à trois fluides configurés pour assurer l'échange thermique entre la solution de travail du circuit fluidique à absorption de la machine, le fluide réfrigérant à compression du circuit fluidique (200) et une source de refroidissement (3).

6. Système selon l'une quelconque des revendications 1 à 3 dans lequel la machine à compression est agencée en parallèle sur le circuit fluidique (100) de la machine à absorption.

7. Système selon la revendication précédente dans lequel le circuit fluidique à absorption (100) comprend une première branche de dérivation (300) configurée pour faire circuler la solution de travail au niveau de l'évaporateur (204) de la machine à compression comme source de chaleur.

8. Système selon la revendication précédente dans lequel la première branche de dérivation (300) est connectée fluidiquement au circuit fluidique à absorption (100) par un premier noeud (10) en aval de l'évaporateur (104), préférentiellement entre l'évaporateur (104) et l'absorbeur (105) et par un deuxième noeud (11) en amont de l'évaporateur (104), préférentiellement entre le détendeur (103) et l'évaporateur (104).

9. Système selon l'une quelconque des trois revendications précédentes dans lequel le circuit fluidique à absorption (100) comprend une deuxième branche de dérivation (301) configurée pour faire circuler la solution de travail au niveau du condenseur (202) de la machine à compression comme source de chaleur.

10. Système selon la revendication précédente dans lequel la deuxième branche de dérivation (301) est connectée fluidiquement au circuit fluidique à absorption (100) par un premier noeud (12) en aval du condenseur (102), préférentiellement entre le condenseur (102) et le détendeur (103) et par un deuxième noeud (13) en amont du condenseur (102), préférentiellement entre le générateur (107) et le condenseur (102).

11. Système selon l'une quelconque des revendications précédentes dans lequel la solution de travail de la machine à absorption est un mélange NH3/H2O comme couple fluide frigorigène/absorbant et un fluide réfrigérant de la machine à compression est choisi parmi la famille des hydrofluoro-oléfines (HFO), dit de quatrième génération, tel que par exemple R-1234yf.

12. Procédé d'utilisation d'un système de production de froid selon l'une quelconque des revendications précédentes dans lequel
dans la machine à absorption
- le générateur (107) vaporise le fluide frigorigène de la solution de travail par transfert de chaleur d'une source de chaleur (1)
- le condenseur (102) condense le fluide frigorigène à l'état de vapeur issu du générateur (107) par transfert de chaleur d'une source de chaleur secondaire (3)
- l'évaporateur (104) vaporise le fluide frigorigène issu du condenseur (102) par transfert de chaleur d'une source de chaleur à refroidir (2) et produit une énergie frigorifique,
- l'absorbeur (105) condense le fluide frigorigène à l'état de vapeur issu de l'évaporateur (107) pour permettre son absorption par l'absorbant,
dans la machine à compression
- le compresseur (203) aspire le fluide réfrigérant à l'état gazeux à basse pression et à basse température (1) pour élever sa pression et sa température
- le condenseur (202) condense le fluide réfrigérant à l'état gazeux provenant du compresseur (203) par transfert de chaleur d'une source de chaleur,
- le détendeur (201) vaporise partiellement le fluide réfrigérant à l'état liquide pour abaisser sa température.
- l'évaporateur (204) vaporise le fluide réfrigérant issu du détendeur par transfert de chaleur d'une source de chaleur
**caractérisé en ce que** la source de chaleur du condenseur (202) et la source de chaleur de l'évaporateur (204) de la machine à compression sont au moins partiellement constituées par la solution de travail de la machine à absorption.

13. Utilisation d'un système selon l'une quelconque des revendications 1 à 11 pour refroidir l'air d'un habitacle de véhicule.

14. Véhicule comprenant un moteur thermique à combustion interne et un système selon l'une quelconque des revendications 1 à 11.

## Patentansprüche

1. Klimatisierungssystem, umfassend:
- eine Absorptionsmaschine zum Erzeugen von Kälte, umfassend einen Absorber (105), einen Generator (107), einen Kondensator (102), einen Verdampfer (104) und einen Absorptionsfluidkreis (100), der imstande ist, eine Arbeitslösung zu empfangen, die ein Kühlfluid und ein Absorptionsmittel umfasst, wobei der Fluidkreis (100) den Generator (107) mit dem Kondensator (102), de, Kondensator (102) mit dem Verdampfer (104), den Verdampfer (104) mit dem Absorber (105) und den Absorber (105) mit dem Generator (107) verbindet, und
- eine mechanische Kompressionsmaschine zum Erzeugen von Kälte, umfassend einen mechanischen Kompressor (203), einen Kondensator (202), einen Druckminderer (201), einen Verdampfer (204) und einen Kompressionsfluidkreis (200), der imstande ist, ein Kältemittelfluid zu empfangen, wobei der Kompressionsfluidkreis (200) den Kompressor (203) mit dem Kondensator (202), den Kondensator (202) mit dem Druckminderer (201), den Druckminderer (201) mit dem Verdampfer (204), den Verdampfer (204) mit dem Kompressor (203) verbindet, wobei sich das Kältemittelfluid von der Arbeitslösung unterscheidet, der Absorptionsfluidzirkulationskreis (100) und der Kompressionsfluidzirkulationskreis (200) unterschiedliche geschlossene Kreise sind, wobei das System **dadurch gekennzeichnet ist,**
**dass** der Verdampfer (104) der Absorptionsmaschine mit dem Verdampfer (204) der Kompressionsmaschine derart gekoppelt ist, dass die Arbeitslösung im Bereich des Verdampfers (104) der Absorptionsmaschine mindestens teilweise eine Wärmequelle darstellt, die dazu bestimmt ist, mit dem Kältemittelfluid im Verdampfer (204) der Kompressionsmaschine auszutauschen, und der Kondensator (102) der Absorptionsmaschine mit dem Kondensator (202) der Kompressionsmaschine derart gekoppelt ist, dass die Arbeitslösung im Bereich des Kondensators (102) der Absorptionsmaschine mindestens teilweise eine Wärmequelle darstellt, die dazu bestimmt ist, mit dem Kältemittelfluid im Kondensator (202) der Kompressionsmaschine auszutauschen.

2. System nach dem vorstehenden Anspruch, wobei der Generator (107) der Absorptionsmaschine konfiguriert ist, um durch eine Wärmequelle (1) versorgt zu werden, die mindestens teilweise Abwärme eines Innenverbrennungsmotors umfasst.

3. System nach dem vorstehenden Anspruch, wobei die Abwärme aus den Abgasen von vorzugsweise einem Fahrzeug stammt.

4. System nach einem der vorstehenden Ansprüche, wobei der Verdampfer (104) der Absorptionsmaschine und der Verdampfer (204) der Kompressionsmaschine in einem Wärmetauscher mit drei Fluiden vereint sind, die konfiguriert sind, um für einen Wärmetausch zwischen der Arbeitslösung des Absorptionsfluidkreises (100), dem Kältemittelfluid des Kompressionsfluidkreises (200) und einer zu kühlenden warmen Quelle (2) zu sorgen.

5. System nach einem der vorstehenden Ansprüche, wobei der Kondensator (102) der Absorptionsmaschine und der Kondensator (202) der Kompressionsmaschine in einem Wärmetauscher mit drei Fluiden vereint sind, die konfiguriert sind, um für einen Wärmetausch zwischen der Arbeitslösung des Absorptionsfluidkreises der Maschine, dem Kompressionskältemittelfluid des Fluidkreises (200) und einer Kühlquelle (3) zu sorgen.

6. System nach einem der Ansprüche 1 bis 3, wobei die Kompressionsmaschine parallel im Fluidkreis (100) der Absorptionsmaschine angeordnet ist.

7. System nach dem vorstehenden Anspruch, wobei der Absorptionsfluidkreis (100) einen ersten Ableitungszweig (300) umfasst, der konfiguriert ist, um die Arbeitslösung im Bereich des Verdampfers (204) der Kompressionsmaschine als Wärmequelle zirkulieren zu lassen.

8. System nach dem vorstehenden Anspruch, wobei der erste Ableitungszweig (300) fluidtechnisch durch einen ersten Knoten (10) stromabwärts des Verdampfers (104), vorzugsweise zwischen dem Verdampfer (104) und dem Absorber (105) und durch einen zweiten Knoten (11) stromaufwärts des Verdampfers (104), vorzugsweise zwischen dem Druckminderer (103) und dem Verdampfer (104) an den Absorptionsfluidkreis (100) angeschlossen ist.

9. System nach einem der drei vorstehenden Ansprüche, wobei der Absorptionsfluidkreis (100) einen zweiten Ableitungszweig (301) umfasst, der konfiguriert ist, um die Arbeitslösung im Bereich des Kondensators (202) der Kompressionsmaschine als Wärmequelle zirkulieren zu lassen.

10. System nach dem vorstehenden Anspruch, wobei der zweite Ableitungszweig (301) fluidtechnisch durch einen ersten Knoten (12) stromabwärts des Kondensators (102), vorzugsweise zwischen dem Kondensator (102) und dem Druckminderer (103) und durch einen zweiten Knoten (13) stromaufwärts des Kondensators (102), vorzugsweise zwischen dem Generator (107) und dem Kondensator (102) an den Absorptionsfluidkreis (100) angeschlossen ist.

11. System nach einem der vorstehenden Ansprüche, wobei die Arbeitslösung der Absorptionsmaschine ein NH3/H20-Gemisch als Fluidpaar Kühlmittel/ Absorptionsmittel ist und ein Kältemittelfluid der Kompressionsmaschine aus der Gruppe der Hydrofluor-Olefine (HFO), der sorgenannten vierten Generation, wie beispielsweise R-1234yf ausgewählt wird.

12. Verfahren zur Verwendung eines Kälteerzeugungssystems nach einem der vorstehenden Ansprüche, wobei in der Absorptionsmaschine
- der Generator (107) das Kältemittelfluid der Arbeitslösung durch Wärmeübertragung aus einer Wärmequelle (1) verdampft
- der Kondensator (102) das Kältemittelfluid im Dampfzustand aus dem Generator (107) durch Wärmeübertragung aus einer Sekundärwärmequelle (3) kondensiert
- der Verdampfer (104) das aus dem Kondensator (102) stammende Kältemittel durch Wärmeübertragung aus einer zu kühlenden Wärmequelle (2) verdampft und eine Kühlenergie erzeugt,
- der Absorber (105) das Kältemittelfluid im Dampfzustand aus dem Verdampfer (107) stammend kondensiert, um dessen Absorption durch das Absorptionsmittel zu ermöglichen,
in der Kompressionsmaschine
- der Kompressor (203) das Kältemittelfluid im gasförmigen Zustand mit Niederdruck und Niedertemperatur (1) ansaugt, um dessen Druck und dessen Temperatur zu erhöhen
- der Kondensator (202) das Kältemittelfluid im gasförmigen Zustand vom Kompressor (203) kommend durch Übertragung von Wärme aus einer Wärmequelle kondensiert,
- der Druckminderer (201) das Kältemittelfluid im flüssigen Zustand teilweise verdampft, um dessen Temperatur zu senken
- der Verdampfer (204) das aus dem Druckminderer stammende Kältemittelfluid durch Übertragung von Wärme aus einer Wärmequelle verdampft
**dadurch gekennzeichnet, dass** die Wärmequelle des Kondensators (202) und die Wärmequelle des Verdampfers (204) der Kompressionsmaschine mindestens teilweise durch die Arbeitslösung der Absorptionsmaschine gebildet werden.

13. Verwendung eines Systems nach einem der Ansprüche 1 bis 11 zum Kühlen der Luft eines Fahrzeuginnenraumes.

14. Fahrzeug, umfassend einen Innenverbrennungsmotor und ein System nach einem der Ansprüche 1 bis 11.

## Claims

1. Air conditioning system comprising:
- an absorption machine for producing cold comprising an absorber (105), a generator (107), a condenser (102), an evaporator (104) and a fluid absorption circuit (100) capable of receiving a working solution comprising a refrigerant fluid and an absorbent, the fluid circuit (100) connecting the generator (107) to the condenser (102), the condenser (102) to the evaporator (104), the evaporator (104) to the absorber (105) and the absorber (105) to the generator (107), and
- a mechanical compression machine for producing cold comprising a mechanical compressor (203), a condenser (202), an expansion valve (201), an evaporator (204) and a fluid compression circuit (200) capable of receiving a refrigerant fluid, the fluid compression circuit (200) connecting the compressor (203) to the condenser (202), the condenser (202) to the expansion valve (201), the expansion valve (201) to the evaporator (204), the evaporator (204) to the compressor (203),
the refrigerant fluid being distinctfrom the working solution, the fluid absorption circuit (100) and the fluid compression circuit (200) being separate, closed circuits, the system being **characterised in that** the evaporator (104) of the absorption machine is coupled to the evaporator (204) of the compression machine such that the working solution at the evaporator (104) of the absorption machine at least partially constitutes a heat source for exchange with the refrigerant in the evaporator (204) of the compression machine, and the condenser (102) of the absorption machine is coupled to the condenser (202) of the compression machine such that the working solution at the condenser (102) of the absorption machine at least partially constitutes a heat source for exchange with the refrigerant in the condenser (202) of the compression machine.

2. System according to the preceding claim, wherein the generator (107) of the absorption machine is configured to be fed by a heat source (1) comprising, at least in part, waste heat from an internal combustion engine.

3. System according to the preceding claim, wherein the waste heat is derived from the exhaust gases, preferentially from a vehicle.

4. System according to any one of the preceding claims, wherein the evaporator (104) of the absorption machine and the evaporator (204) of the compression machine are combined in a three-fluid heat exchanger configured to ensure heat exchange between the working solution of the fluid absorption circuit (100), the refrigerant fluid of the fluid compression circuit (200) and a hot source to be cooled (2).

5. System according to any one of the preceding claims, wherein the condenser (102) of the absorption machine and the condenser (202) of the compression machine are combined in a three-fluid heat exchanger configured to ensure heat exchange between the working solution of the fluid absorption circuit of the machine, the compression refrigerant fluid of the fluid circuit (200) and a cooling source (3).

6. System according to any one of claims 1 to 3, wherein the compression machine is arranged in parallel on the fluid circuit (100) of the absorption machine.

7. System according to the preceding claim, wherein the fluid absorption circuit (100) comprises a first bypass branch (300) configured to convey the working solution to the evaporator (204) of the compression machine as a heat source.

8. System according to the preceding claim, wherein the first bypass branch (300) is fluidly connected to the fluid absorption circuit (100) by a first node (10) downstream of the evaporator (104), preferentially between the evaporator (104) and the absorber (105), and by a second node (11) upstream of the evaporator (104), preferentially between the expansion valve (103) and the evaporator (104).

9. System according to any one of the three preceding claims, wherein the fluid absorption circuit (100) comprises a second bypass branch (301) configured to convey the working solution to the condenser (202) of the compression machine as a heat source.

10. System according to the preceding claim, wherein the second bypass branch (301) is fluidly connected to the fluid absorption circuit (100) by a first node (12) downstream of the condenser (102), preferentially between the condenser (102) and the expansion valve (103), and by a second node (13) upstream of the condenser (102), preferentially between the generator (107) and the condenser (102).

11. System according to any one of the preceding claims, wherein the working solution of the absorption machine is a mixture of NH3/H2O as a refrigerant/absorbent fluid pair, and a refrigerant of the compression machine is selected from the family of so-called fourth-generation hydrofluoroolefins (HFO), such as R-1234yf for example.

12. Method of using a cold production system according to any one of the preceding claims, wherein,
in the absorption machine
- the generator (107) vaporises the refrigerant fluid in the working solution by heat transfer from a heat source (1)
- the condenser (102) condenses the vaporous refrigerant fluid from the generator (107) by heat transfer from a secondary heat source (3)
- the evaporator (104) vaporises the refrigerant fluid from the condenser (102) by heat transfer from a heat source to be cooled (2) and produces cooling energy,
- the absorber (105) condenses the vaporous refrigerant fluid from the evaporator (107) to allow it to be absorbed by the absorbent,
in the compression machine
- the compressor (203) draws in the low-pressure, low-temperature gaseous refrigerant fluid (1) in order to raise the pressure and temperature thereof
- the condenser (202) condenses the gaseous refrigerant fluid from the compressor (203) by heat transfer from a heat source,
- the expansion valve (201) partially vaporises the liquid refrigerant fluid to lower the temperature thereof.
- the evaporator (204) vaporises the refrigerant fluid from the expansion valve by heat transfer from a heat source
**characterised in that** the heat source of the condenser (202) and the heat source of the evaporator (204) of the compression machine are at least partially constituted by the working solution of the absorption machine.

13. Use of a system according to any one of claims 1 to 11 to cool the air of a passenger compartment of a vehicle.

14. Vehicle comprising an internal combustion engine and a system according to any one of claims 1 to 11.
